# EUROPÄISCHE PATENTANMELDUNG

(11) **EP 2 394 514 A1**
(43) Veröffentlichungstag der Anmeldung: **14.12.2011**
(21) Anmeldenummer: 11004628.1
(22) Anmeldetag: 07.06.2011
(51) Int. Cl.: A21B 3/15

(54) **Backblech für Backöfen, insbesondere für industriell betriebene Backanlagen**

(30) Priorität: 10.06.2010 DE 202010007825 U
(71) Anmelder: Kempf, Marie-Luise, 85296 Rohrbach (DE)
(72) Erfinder: Kempf, Marie-Luise, 85296 Rohrbach (DE)
(74) Vertreter: Liebl, Thomas

(57) **Zusammenfassung**

Die Erfindung betrifft ein Backblech für Backöfen, insbesondere für industriell betriebene Backanlagen, mit einem das Backblech (1) von einer Backblechunterseite her abstützenden Stabilisier- und/oder Tragelement (3), das mit dem Backblech (1) mittels wenigstens einer Fixiereinrichtung verbunden ist. Erfindungsgemäß ist die wenigstens eine Fixiereinrichtung durch eine Schiebeführung (12) gebildet, mittels der das Backblech (1) auf das Stabilisier- und/oder Tragelement (3) aufschiebbar ist.

## Beschreibung

Die Erfindung betrifft ein Backblech für Backöfen, insbesondere für industriell betriebene Backanlagen nach dem Oberbegriff des Anspruchs 1.

Industriell betriebene Großbackanlagen, in denen eine große Anzahl von Teiglingen automatisiert gebacken und kontinuierlich durch die Backanlage verfahren werden, sind allgemein bekannt, so zum Beispiel aus der EP 0710441 B1, in der ein derartiger Backofen zum kontinuierlichen Backen von Brot-, Wienerback-, Konditorwaren- und dergleichen Waren beschrieben wird, welche Backanlage eine Backkammer sowie Mittel zum Fördern von Trägem, wie beispielsweise Backblechen, auf denen die genannten Produkte angeordnet sind, um diese durch die Backkammer zu führen, aufweist. Derartige in industriellen Backanlagen eingesetzten Backbleche müssen daher einen insgesamt relativ stabilen Aufbau aufweisen, damit diese im industriellen Backbetrieb eine hohe Lebensdauer und damit eine hohe Standzeit aufweisen.

Derartige Backbleche für industriell betriebene Backanlagen bzw. Backöfen, die regelmäßig eine Rechteckform aufweisen, werden regelmäßig an ihrer Unterseite mit einem das Backblech abstützenden bzw. stabilisierenden Edelstahlrahmen ausgestattet, der an der Backblechunterseite randseitig umläuft. Dazu wird das Backblech in Rahmenumlaufrichtung gesehen mit einer Mehrzahl von voneinander beabstandeten Nietverbindungen fest mit dem Rahmen verbunden. Das Backblech selbst ist zum Beispiel aus einem Aluminiummaterial hergestellt. Dieser Aufbau weist jedoch eine Reihe von Nachteilen auf, da der Edelstahlrahmen und das Backblech, da sie aus unterschiedlichen Materialien gefertigt sind, unterschiedliche Wärmeausdehnungen aufweisen, was gegebenenfalls zu einem unerwünschten Ausbeulen des Backblechs führt.

Ein weiterer Nachteil dieser Ausgestaltung liegt darin, dass es auf Grund der hohen Beanspruchung der Backbleche in den industriell betriebenen Backanlagen gegebenenfalls zu einem Lösen einzelner Nietverbindungen führen kann. Die gelösten Nieten können eine Beschädigung der Backanlage zur Folge haben bzw. können gegebenenfalls sogar das Backgut verunreinigen.

Ein weiterer wesentlicher Nachteil dieses Aufbaus ist darin zu sehen, dass derartige Nietverbindungen auf der Backblechoberseite vorstehen, was zu einer unerwünschten Verletzung des in diesem Bereich angeordneten Backguts führen kann.

Schließlich ist es ein weiterer wesentlicher Nachteil einer derartigen Backblechausgestaltung, dass zur Festlegung des Backbleches auf dem Edelstahlrahmen eine Vielzahl von Nieten gesetzt werden muss; bei einem nach einer bestimmten Betriebszeit eventuell notwendigen Austausch des Backbleches muss daher eine Vielzahl von Nietverbindungen gelöst werden und auch wieder gesetzt werden, um das neue Backblech auf dem "alten" Edelstahlrahmen festzulegen. In diesem Zusammenhang ist dann auch zu berücksichtigen, dass die neuen Nieten nicht mehr an den Stellen gesetzt werden können, wo die alten Nietverbindungen ausgebildet worden sind, sondern beabstandet von diesen, was zu einer erheblichen Schwächung der Stabilität des Edelstahlrahmens führt.

Ausgehend davon ist es Aufgabe der vorliegenden Erfindung, ein Backblech für Backöfen, insbesondere für industriell betriebene Backanlagen, zu schaffen, mittels dem die vorstehend genannten Nachteile auf einfache und funktionssichere Weise vermieden werden können.

Diese Aufgabe wird gelöst mit den Merkmalen des Anspruchs 1. Vorteilhafte Ausgestaltungen hierzu sind Gegenstand der darauf rückbezogenen Unteransprüche.

Gemäß Anspruch 1 wird ein Backblech für Backöfen, insbesondere für industriell betriebene Backanlagen, vorgeschlagen, das ein das Backblech von einer Backblechunterseite her abstützendes Stabilisier- und/oder Tragelement aufweist, das mit dem Backblech mittels wenigstens einer Fixiereinrichtung verbunden ist. Erfindungsgemäß ist vorgesehen, dass die wenigstens eine Fixiereinrichtung durch eine Schiebeführung gebildet ist, mittels der das Backblech auf das Stabilisier- und/oder Tragelement aufschiebbar ist. Alternativ oder zusätzlich dazu ist erfindungsgemäß vorgesehen, dass das Backblech so auf dem Stabilisier- und/oder Tragelement festgelegt ist, dass die wenigstens eine Fixiereinrichtung und/oder ein Bestandteil derselben nicht auf der der Backblechunterseite gegenüberliegenden Backblechoberseite vor- und/oder absteht.

Mit einer derartigen Schiebeführung wird eine besonders einfache und funktionssichere Montage des Backblechs am zum Beispiel durch einen Rahmen gebildeten Stabilisier- und/oder Tragelement möglich, da das Backblech dann einfach auf den Rahmen aufgeschoben werden kann, so dass eine aufwändige Festlegung mittels einer Mehrzahl von Nieten vorteilhaft vermieden werden kann. Dadurch kann das Backblech besonders gut gemäß der zweiten erfindungsgemäßen alternativen bzw. zusätzlichen Lösung auf einfache Weise ohne durch eine Fixiereinrichtung gebildete Erhebungen oder Überstände auf der Backblechoberseite am Stabilisier- und/oder Tragelement festgelegt werden, so dass es zu keiner unerwünschten Verletzung des Backgutes durch derartige vorstehende Fixiereinrichtungen kommen kann.

Desweiteren können mittels derartiger Schiebeführungen auch die Wärmedehnungen auf Grund unterschiedlicher Materialien von Backblech und Stabilisier- und/oder Tragelement sehr gut beherrscht werden, da mit derartigen Schiebeführungen auf einfache Weise, zum Beispiel durch entsprechende Toleranz- und Spaltmaßausbildungen im Bereich der Schiebeführung, eine schwimmende Lagerung des Backblechs auf dem Stabilisier- und/oder Tragelement realisiert werden kann, und zwar gleichzeitig mit einer funktionssicheren Festlegung des Backblechs auf dem Stabilisier- und/oder Tragelement.

Besonders vorteilhaft ist eine derartige Schiebeführung auch in Verbindung mit einem gegebenenfalls erforderlichen Austausch des Backblechs, da dann das Backblech, gegebenenfalls nach Lösen einer entsprechenden Fixiereinrichtung, die, wie dies nachstehend noch näher erläutert wird, von der Unterseite des Backblechs her einfach zugänglich ist, lediglich in Schieberichtung abgezogen werden braucht. Entsprechend braucht ein neues Backblech nur wieder in Schieberichtung aufgeschoben und anschließend gegebenenfalls fixiert werden (von der Backblechunterseite her fixiert werden). Dadurch lassen sich die Rüstseiten erheblich reduzieren.

Desweiteren wird mit einer derartigen Schiebeführung funktionssicher vermieden, dass sich im rauen Backanlagenbetrieb gegebenenfalls lösende Fixiereinrichtungen in der Backanlage Schaden anrichten können, bzw. sogar in das Backgut eindringen können.

Unter eine Schiebeführung wird im vorliegenden Fall jegliche Art von Gleitführung verstanden, bei der das Backblech mit einem backblechseitigen Führungselement ausgestattet ist, das mit wenigstens einem stabilisier- und/oder tragelementseitigen Führungs-Gegenelement zusammenwirkt, und zwar insbesondere mittels einer Hintergriffs- und/oder Umgriffsverbindung zusammenwirkt. Eine derartige Hintergriffs- und/oder Umgriffsverbindung ermöglicht eine funktionssichere Halterung des Backblechs am Stabilisier- und/oder Tragelement im aufgeschobenen Zustand, so dass das Backblech sich nicht mehr von dem Stabilisier- und/oder Tragelement lösen kann. Grundsätzlich gibt es verschiedene Möglichkeiten derartige Hintergriffs- und/oder Umgriffsverbindungen auszugestalten, so zum Beispiel als Schwalbenschwanzführung oder als Nut-Feder-Verbindung, um nur einige Ausführungsformen beispielhaft zu nennen.

Gemäß einer bevorzugten konkreten Ausgestaltung ist vorgesehen, dass das backblechseitige Führungselement oder das stabilisier- und/oder tragelementseitige Führungs-Gegenelement der Hintergriffs- und/oder Umgriffsverbindung wenigstens eine Führungsnut aufweist oder ausbildet, in die das jeweils andere Bauteil dann mit einem Nut-Eingriffsbereich eingreift, insbesondere formschlüssig eingreift und darin entlang einer definierten Wegstrecke verschiebbar geführt ist.

Besonders vorteilhaft ist dabei eine Ausgestaltung, bei der die wenigstens eine Führungsnut am Stabilisier- und/oder Tragelement ausgebildet ist, in die ein backblechseitiger Nut-Eingriffsbereich eingreift. Ein derartiger backblechseitiger Nut-Eingriffsbereich kann besonders einfach durch zum Beispiel randseitige Umbiegungen, Abkantungen, Umbördelungen oder dergleichen hergestellt werden, die dann einen Eingriffsschenkel ausbilden. Insbesondere im Falle von nicht ebenen, nicht planen Backblechen, wie zum Beispiel von Muldenblechen, kann der Nut-Eingriffsbereich aber auch durch separate, wenigstens einen Eingriffsschenkel aufweisende Bauteile, zum Beispiel Schienen oder dergleichen, gebildet sein, die an der Backblechunterseite durch bevorzugt Schweißen, insbesondere durch Punktschweißen, angehaftet sind. Grundsätzlich bestünde weiter auch die Möglichkeit, in äquivalenter Weise, die wenigstens eine Führungsnut am Backblech auszubilden und den wenigstens einen Nut-Eingriffsbereich dann entsprechend zugeordnet am Stabilisier- und/oder Tragelement auszubilden. Eine derartige äquivalente Ausgestaltung soll ausdrücklich mit vom Schutzumfang umfasst sein. Nachfolgend werden jedoch die die wenigstens eine Führungsnut bzw. den wenigstens einen Nut-Eingriffsbereich näher definierenden Ausgestaltungen aus Übersichtlichkeitsgründen lediglich anhand der bevorzugten konkreten Ausführungsform beschrieben, bei der die wenigstens eine Führungsnut am Stabilisier- und/oder Tragelement ausgebildet ist, während der wenigstens eine Nut-Eingriffsbereich backblechseitig ausgebildet ist:

So ist gemäß einer ersten diesbezüglichen konkreten Ausgestaltung vorgesehen, dass das Backblech wenigstens zwei einander gegenüberliegende und zueinander parallele Seiten aufweist, wobei insbesondere vorgesehen ist, dass das Backblech eine an sich übliche Rechteckform aufweist. In diesem Fall weist dann das Backblech zur Ausbildung gegenüberliegender Nut-Eingriffsbereiche an den gegenüberliegenden und zueinander parallelen Backblechseiten wenigstens eine randseitige Umbiegung, insbesondere in Form einer Abkantung oder einer Umbördelung oder dergleichen, als Eingriffsschenkel auf. Die den Eingriffsschenkel ausbildende Umbiegung ist dabei vorzugsweise so ausgebildet, dass diese im Querschnitt betrachtet in etwa U-förmig ausgebildet ist, um eine zuverlässige Hintergriffsverbindung bzw. Umgriffsverbindung mit den den Eingriffsschenkeln bzw. Umbiegungen am Stabilisier- und/oder Tragelement zugeordneten Führungsnuten auszubilden. Analoges gilt für eine Ausführungsform mit durch separate Bauteile, zum Beispiel Schienen, gebildeten Eingriffsschenkeln, wie dies mit Anspruch 7 beansprucht ist.

Die wenigstens eine Führungsnut kann dabei grundsätzlich integral am Backblech oder am Stabilisier- und/oder Tragelement ausgebildet sein. Gemäß einer bevorzugten alternativen Ausgestaltung hierzu ist die wenigstens eine Führungsnut durch eine Schiene gebildet, die als separates Bauteil mit dem Backblech oder alternativ mit dem Stabilisier- und/oder Tragelement verbunden ist und zusammen mit diesem oder alleine eine schlitzartige Nutöffnung ausbildet. Eine derartige Schiene zur Nutausbildung kann auf einfache Weise hergestellt werden, zum Beispiel als einfaches Blechbiegeteil, so dass dadurch der bauliche Aufwand zur Ausbildung der erfindungsgemäßen Schiebeführung wesentlich reduziert ist.

Konkret kann die die wenigstens eine Führungsnut ausbildende Schiene mit dem jeweils zugeordneten Bauteil, insbesondere mit dem Stabilisier- und/oder Tragelement, lösbar oder unlösbar verbunden sein, wobei eine stabile stoffschlüssige Bauteilverbindung ohne zusätzliche Befestigungsmittel bevorzugt ist. Die Stoffschlussverbindung wird bevorzugt durch Schweißen hergestellt, höchstbevor-cugt durch mehrere voneinander beabstandete Schweißpunkte, so dass eine zuverlässige Festlegung der wenigstens einen Schiene auf dem zum Beispiel durch einen Rahmen gebildeten Stabilisier- und/oder Tragelement möglich ist.

Die Schiene selbst kann dabei jegliche geeignete Form aufweisen, insbesondere im Querschnitt auch U-förmig ausgebildet sein, um direkt an der Schiene bereits eine unabhängig von der Ausgestaltung des zugeordneten Bauteils ausgebildete, definierte schlitzartige Nutöffnung auszubilden. In diesem Fall kann es dann erforderlich sein, in den Schweißpunkt-Ansatzbereichen an einem oberen, nicht festzulegenden U-Schenkel der Schiene eine Mehrzahl von voneinander in Schienenlängsrichtung beabstandeten Ausnehmungen vorzusehen, in denen das Punktschweißgerät ungehindert an dem Bauteil zugeordneten unteren U-Schenkel in Ansatz gebracht werden kann.

Das Stabilisier- und/oder Tragelement kann grundsätzlich auf unterschiedlichste Art und Weise ausgebildet sein, so zum Beispiel gegebenenfalls auch plattenförmig ausgebildet sein. Besonders bevorzugt ist jedoch eine konkrete Ausgestaltung des Stabilisier- und/oder Tragelementes in Form eines Rahmens, insbesondere eines solchen Rahmens, der im montierten Zustand randseitig wenigstens bereichsweise, vorzugsweise vollständig an der Backblechunterseite umläuft. Besonders bevorzugt ist hierbei eine an sich übliche rechteckförmige Rahmenausbildung in Verbindung mit einer üblichen rechteckförmigen Backblechausgestaltung.

Gemäß einer besonders bevorzugten konkreten erfindungsgemäßen Ausgestaltung sind an einem rechteckförmigen Rahmen an drei der vier Rechteckseiten Führungsnuten mit jeweils einer vorzugsweise nach außen weisenden Nutöffnung angeordnet, in die im aufgeschobenen Zustand des Backblechs jeweils backblechseitig ausgebildete randseitige Eingriffsschenkel als Nut-Eingriffsbereiche im Wesentlichen formschlüssig eingreifen. Wie bereits zuvor ausgeführt, kann ein derartiges formschlüssiges Eingreifen ausdrücklich auch eine schwimmende Lagerung bedeuten, um zum Beispiel durch unterschiedliche Materialien von Rahmen und Backblech hervorgerufene Wärmedehnungen gut ausgleichen zu können. Bei einer derartigen konkreten, bevorzugten erfindungsgemäßen Ausgestaltung wird das Backblech in den gegenüberliegenden parallelen Führungsnuten des rechteckförmigen Rahmens eingefädelt und anschließend so lange entlang derselben verschoben, bis ein stirnseitiger, randseitiger Eingriffsschenkel des Backblechs in die an der dritten Rechteckseite des rechteckförmigen Rahmens ausgebildete Führungsnut eingreift, wodurch der Aufschiebevorgang beendet ist und eine exakte Positionierung des Backblechs in der gewünschten Position erzielt wird. Dabei kann es ausreichend sein, dass sich die Führungsnuten und/oder die zugeordneten backblechseitigen Eingriffsschenkel auch lediglich über einen Teilbereich der zugeordneten Rechteckseite erstrecken, wobei selbstverständlich auch eine Erstreckung über die gesamten Rechteckseiten oder eine lediglich abschnittsweise Ausgestaltung und Anordnung möglich ist.

Dabei kann die Schiebeführung grundsätzlich so ausgebildet sein, dass das Backblech im aufgeschobenen Zustand mittels einer Reib- und/oder Formschlussverbindung, zum Beispiel einer Rastverbindung oder dergleichen, funktionssicher und fest auf dem Rahmen gehalten ist. Beispielsweise kann eine derartige Formschluss- bzw. Rastverbindung durch backblechseitige Rastelemente gebildet sein, die in entsprechende rahmenseitige Gegenrastelemente lösbar überdrückbar eingreifen. Besonders bevorzugt ist jedoch eine derartige stabile Festlegung des Backblechs am Rahmen, bei der der Rahmen an der vierten, keine Führungsnut aufweisenden Seite bei aufgeschobenen Backblech, mit einem Schließelement versehen ist, dass zusammen mit dem Rahmen oder alleine einen Nutschlitz ausbildet, in den das Backblech mit einem vierten randseitigen Eingriffsschenkel eingreift, insbesondere formschlüssig eingreift. Ein derartiges Schließelement kann zum Beispiel durch ein Schließblech, insbesondere ein abgewinkeltes Schließblech gebildet sein. Dieses Schließelement ist bevorzugt lösbar oder unlösbar, durch beispielsweise eine oder mehrere Nietverbindungen, am Rahmen festgelegt.

Je nach der Backblechgröße kann der Rahmen wenigstens eine den Rahmen versteifende und/oder das Backblech abstützende Versteifungs- und/oder Querstrebe aufweisen.

Weiter kann das Backblech grundsätzlich auf verschiedene Art und Weise ausgebildet sein, zum Beispiel als Muldenblech oder aber auch als ebenes Backblech, um nur einige Beispiele zu nennen. Bevorzugt kann weiter vorgesehen sein, dass das Backblech durch ein Lochblech gebildet ist bzw. eine definierte Lochstruktur aufweist. Weiter kann das Backblech auf der Backblechoberseite wenigstens bereichsweise mit einer Antihaftbeschichtung versehen sein.

Das Stabilisier- und/oder Tragelement, das insbesondere durch einen Rahmen gebildet ist, ist bevorzugt aus einem Edelstahl hergestellt. Grundsätzlich können jedoch auch andere geeignete Materialien zum Einsatz kommen.

Ebenso kann das Backblech aus jedem geeignetem Material hergestellt sein, zum Beispiel auch aus einem hochtemperaturbeständigen Kunststoff um nur ein Beispiel zu nennen. Die Begrifflichkeit "Blech" wird hier im Rahmen der vorliegenden Erfindungsidee ausschließlich deshalb verwendet, weil sich dieser Begriff für dieses Bauteil auf dem Fachgebiet als feststehender Begriff eingebürgert hat. Selbstverständlich ist jedoch die Herstellung des Backblechs durch eine Blechplatte nach wie vor die bevorzugte Ausgestaltung, insbesondere durch eine Blechplatte aus einem Leichtmetall, wie zum Beispiel aus einem Aluminium. Unter einem Leichtmetall werden auch sämtliche Arten von Leichtmetalliegierungen verstanden, die für den vorliegenden Einsatzzweck geeignet sind.

Die vorstehend erläuterten und/oder in den Unteransprüchen wiedergegebenen vorteilhaften Aus- und/oder Weiterbildungen können dabei - außer zum Beispiel in den Fällen eindeutiger Abhängigkeiten oder unvereinbarer Alternativen - einzeln oder aber auch in beliebiger Kombination miteinander zur Anwendung kommen.

Die Erfindung wird nachfolgend anhand einer Zeichnung näher erläutert.

Es zeigen:
- Fig. 1: schematisch eine perspektivische Explosionsdarstellung einer beispielhaften Ausführungsform eines erfindungsgemäßen Backblechs,
- Fig.2: schematisch eine perspektivische Draufsicht auf einen Edelstahlrahmen mit darauf aufgeschweißten Schienen,
- Fig. 3: den Edelstahlrahmen gemäß Fig. 2 mit teilweise aufgeschobenen Backblech,
- Fig. 4: den Aufbau gemäß Fig. 3 mit vollständig aufgeschobenem Backblech,
- Fig. 5: einen Schnitt entlang der Linie A-A der Fig. 4,
- Fig. 6: einen Schnitt entlang der Linie B-B der Fig. 4, und
- Fig. 7: eine Ausführungsform mit Muldenblech als Backblech.

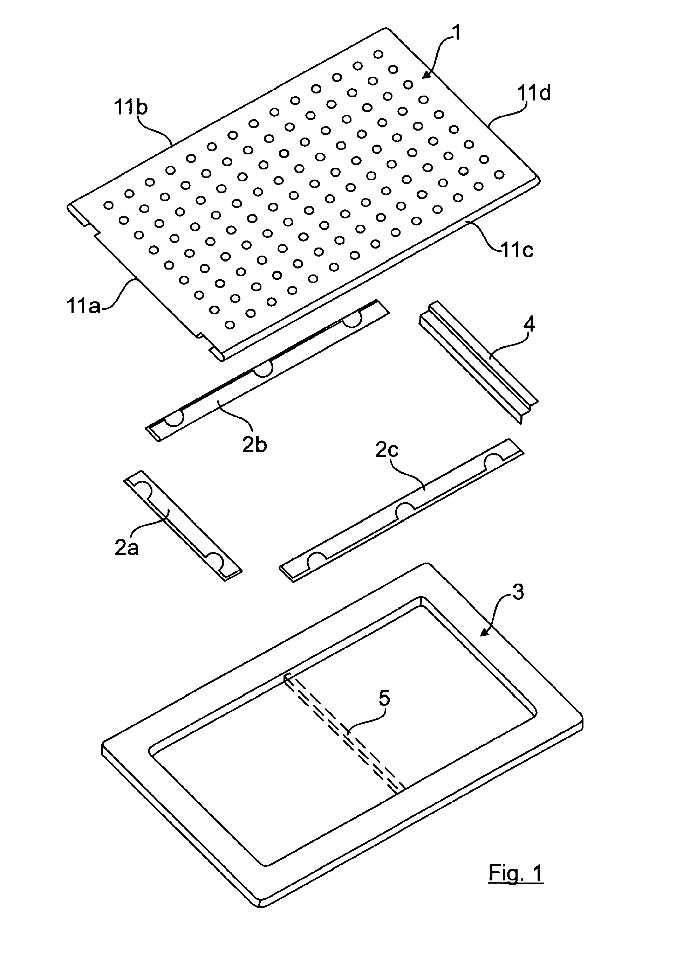

In der Fig. 1 ist schematisch in auseinandergezogener Darstellung eine beispielhafte Ausführungsform eines erfindungsgemäßen Aufbaus gezeigt, der im Wesentlichen aus einem durch ein Lochblech mit definierter Lochstruktur gebildeten Backblech 1, drei Führungsschienen 2a, 2b, 2c, einem Edelstahlrahmen 3 sowie einem Schließblech 4 besteht.

Je nach der Größe des Edelstahlrahmens 3 kann dieser mit einer oder mehreren Versteifungsstreben 5 versteift sein, was in der Fig. 1 lediglich äußerst schematisch und strichliert dargestellt ist.

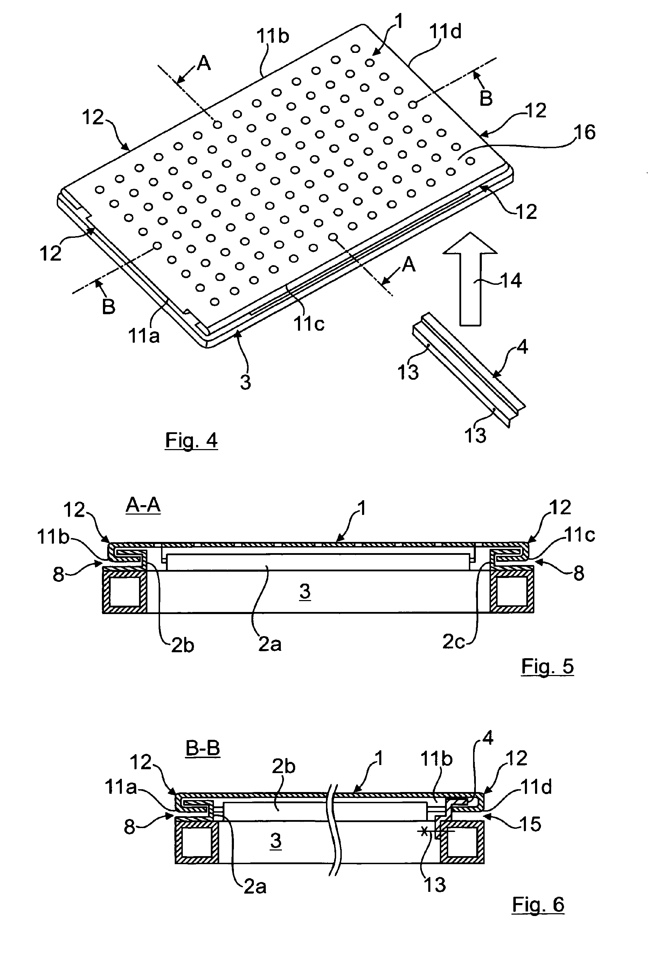

Wie dies aus der Fig. 1 und insbesondere aus den, jeweils Schnittansichten durch den montierten Aufbau der Fig. 4 zeigenden Darstellungen der Fig. 5 und 6 ersichtlich ist, weisen die Führungsschienen 2a, 2b, 2c im Querschnitt betrachtet jeweils eine U-Form auf, mit einem unteren Schenkel 6 und einem oberen Schenkel 7, zwischen denen eine schlitzförmige Nutöffnung 8 ausgebildet ist.

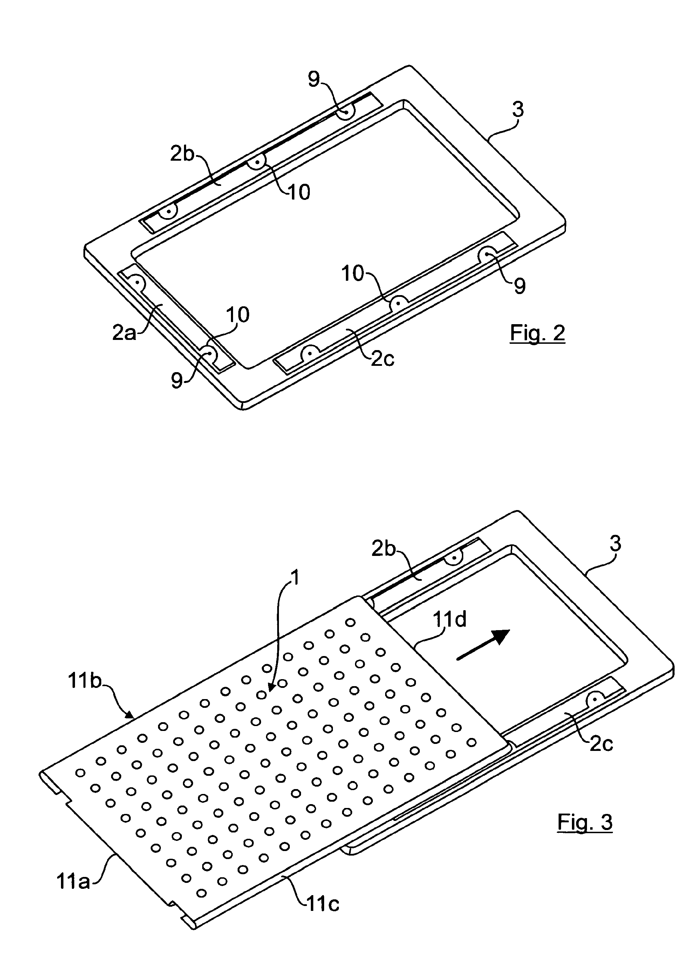

Wie dies insbesondere aus der Fig. 2 hervorgeht, werden die Führungsschienen 2a, 2b, 2c mittels deren unterer Schenkel 6 in eine Anlage auf der Oberseite des Edelstahlrahmens 3 gebracht und dort mittels einer Punktschweißverbindung 9 stoffschlüssig festgelegt.

Um einem hier nicht dargestellten Punktschweißgerät den Zugang zum unteren Schenkel 6 zu gewährleisten, sind im oberen Schenkel 7 hier beispielhaft halbkreisförmige Ausnehmungen 10 ausgebildet, die den unteren Schenkel 6 im Bereich der zu setzenden Punktschweißverbindung 9 frei zugänglich machen.

Wie dies aus der Fig. 2 weiter ersichtlich ist, weisen die Nutöffnungen 8 der einzelnen Führungsschienen 2a, 2b, 2c hier jeweils, bezogen auf den Edelstahlrahmen 3, nach außen.

Wie dies weiter auch insbesondere aus den Schnittdarstellungen der Figuren 5 und 6 ersichtlich ist, weist das Backblech 1 an seinen vier Backblechseiten jeweils randseitige Umbiegungen 11a, 11 b, 11 c und 11 d auf, die zum Beispiel durch Abkantungen oder Umbördelungen oder dergleichen ausgebildet sind und die Eingriffsschenkel ausbilden. Diese Umbiegungen 11a bis 11d bilden zusammen mit den Führungsschienen 2a bis 2c sowie dem Schließblech 4 eine erfindungsgemäße Gleit- bzw. Schiebeführung 12 aus, die im hier gezeigten, aufgeschobenen Zustand eine Hintergriffsverbindung ausbildet.

Zum Aufschieben des Backblechs 1 wird dieses mit den gegenüberliegenden Umbiegungen 11 b, 11c zuerst in die entsprechend zugeordneten Führungsschienen 2b, 2c des Edelstahlrahmens 3 eingefädelt, wie dies schematisch in der Fig. 3 dargestellt ist, wobei das Backblech 1 dann anschließend so lange entlang der Führungsschienen 2b, 2c verschoben wird, bis die stirnseitige Umbiegung 11a in die Nutöffnung 8 der stirnseitigen Führungsschiene 2a eingreift und dort zum Anschlag kommt. In diesem Zustand ist das Backblech 1 dann exakt und positionsgenau auf dem Edelstahlrahmen 3 positioniert (Fig. 4).

Um das Backblech 1 in dieser aufgeschobenen Position zu fixieren, wird anschließend das abgewinkelte Schließblech 4 entsprechend dem Pfeil 14 in der Fig. 4 von der Backblechunterseite her so am Edelstahlrahmen 3 fixiert und positioniert, dass dieses zusammen mit dem Edelstahlrahmen 3 einen in der Fig. 6 gezeigten Nutschlitz 15 ausbildet, in den das Backblech 1 mit seiner Umbiegung 11 d eingreift.

Das Schließblech 4 wird dann mittels einer Nietverbindung 13 am Edelstahlrahmen festgelegt, wobei, wie dies schematisch in der Fig. 4 dargestellt ist, mehrere derartige voneinander beabstandete Nietverbindungen 13 vorgesehen werden können.

Der Eingriff der Umbiegungen 11a, 11b, 11c, 11d in die Nutöffnungen 8 der Führungsschienen 2a, 2b, 2c sowie den Nutschlitz 15 des Schließblechs 4 erfolgt bevorzugt formschlüssig und ist in den Darstellungen der Fig. 5 und 6 lediglich aus Übersichtlichkeitsgründen mit einem relativ großen Spiel dargestellt, um die einzelnen Bauteile besser darstellen zu können. Ein gewisser Spaltabstand zwischen den einzelnen Bauteilen kann jedoch durchaus erwünscht sein, wenn eine mehr oder weniger schwimmende Lagerung des zum Beispiel aus einem Aluminiummaterial hergestellten Backblechs 1 erwünscht sein sollte.

Wie dies insbesondere aus der Fig. 4 hervorgeht, die den im Wesentlichen fertig montierten Zustand der Backblechanordnung bzw. des Backblechaufbaus zeigt, ist mit der erfindungsgemäßen Schiebeführung 12 auf einfache Weise sichergestellt, dass auf der Backblechoberseite 16 keine Nieten oder dergleichen Fixierelemente vor- bzw. abstehen, so dass im hier gezeigten Beispielfall eine vollständig ebene und plane Backblechoberseite 16 ausgebildet wird, die hilft, ein Verletzen des Backguts zu vermeiden. Das Gleiche gilt im übertragenen Sinne für Backbleche, die zum Beispiel als Muldenbackblech für Baguettes oder dergleichen ausgebildet sind.

Das Backblech 1 kann, wie in den Fig. 1 bis 5 dargestellt, mit einer Lochblechstruktur versehen sein, zum Beispiel mit einer Mikrolochung. Alternativ dazu kann das Backblech aber auch, wie in der Fig. 6 dargestellt, aus einem vollen Material, das heißt ohne eine derartige Lochung hergestellt sein. Das Backblech 1 ist bevorzugt aus einer hochwertigen Aluminiumlegierung gefertigt und kann zum Beispiel eine Materialstärke von 1,5 bis 2 mm aufweisen. Selbstverständlich sind auch andere Materialstärken möglich.

Desweiteren ist der Edelstahlrahmen 3, wie insbesondere aus den Schnittansichten der Fig. 5 und 6 ersichtlich, durch ein im Querschnitt geschlossenes Hohlprofil gebildet.

Das Backblech 1 kann weiter auf seiner Backblechoberseite 16 mit einer Antihaftbeschichtung versehen sein, was hier aber nicht dargestellt ist.

Wie aus der eben geschilderten figürlichen Darstellung weiter sehr gut ersichtlich ist, braucht im Falle einer zum Beispiel verschleißbedingten Austauschnotwendigkeit des Backblechs 1 lediglich das Schließblech 4 abmontiert werden, um das Backblech 1 dann von dem Edelstahlrahmen 3 abziehen zu können und im Sinne der Darstellung in der Fig. 3 durch ein neues Backblech 1 ersetzen zu können. Ersichtlich werden dadurch die Rüstzeiten und der Montageaufwand deutlich reduziert, was sich vorteilhaft auf den gesamten Fertigungsprozess sowie auch Backprozess auswirkt.

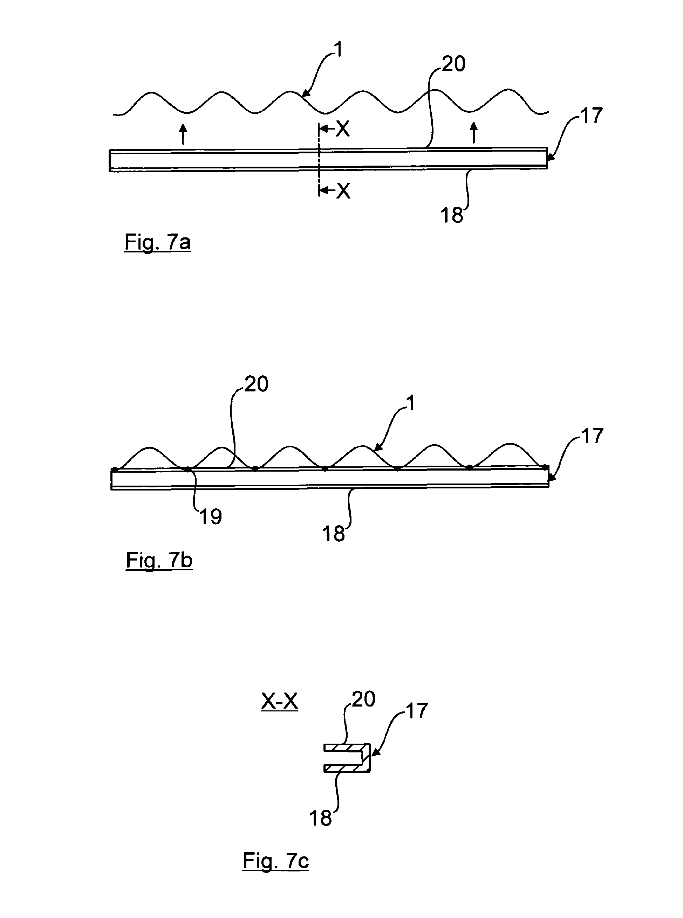

In der Fig. 7 ist zudem schematisch eine Ausführungsform mit einem Muldenblech als Backblech 1 gezeigt, bei dem die Eingriffsschenkel 18 Bestandteil einer separaten Schiene 17 sind, die von unten her mit einem oberen Schenkel 20 an das Backblech 1 mittels Punktschweißverbindungen 19 angepunktet wird (Fig. 7a und 7b). Fig. 7c zeigt einen Schnitt durch die Schiene 17 entlang der Linie X-X der Fig. 7a. Ansonsten entspricht der Aufbau und die Funktionsweise demjenigen bzw. derjenigen der Fig. 1 bis 6.

## Patentansprüche

1. Backblech für Backöfen, insbesondere für industriell betriebene Backanlagen, mit einem das Backblech (1) von einer Backblechunterseite her abstützenden Stabilisier- und/oder Tragelement (3), das mit dem Backblech (1) mittels wenigstens einer Fixiereinrichtung verbunden ist,
**dadurch gekennzeichnet,**
**dass** die wenigstens eine Fixiereinrichtung durch eine Schiebeführung (12) gebildet ist, mittels der das Backblech (1) auf das Stabilisier- und/oder Tragelement (3) aufschiebbar ist.

2. Backblech, insbesondere nach Anspruch 1, **dadurch gekennzeichnet, dass** das Backblech (1) so auf dem Stabilisier- und/oder Tragelement (3) festgelegt ist, dass die wenigstens eine Fixiereinrichtung und/oder ein Bestandteil derselben nicht auf der der Backblechunterseite gegenüberliegenden Backblechoberseite (16) vor- und/oder absteht.

3. Backblech nach Anspruch 1 oder 2, **dadurch gekennzeichnet, dass** die Schiebeführung (12) als Hintergriffs- und/oder Umgriffsverbindung ausgebildet ist und wenigstens ein backblechseitiges Führungselement (11a bis 11d; 17) aufweist, das mit wenigstens einem stabilisier- und/oder tragelementseitigen Führungs-Gegenelement (2a bis 2c, 4) zusammenwirkt.

4. Backblech nach Anspruch 3, **dadurch gekennzeichnet, dass** das backblechseitige Führungselement (11a bis 11d; 17) oder das stabilisier- und/oder tragelementseitige Führungs-Gegenelement (2a bis 2c, 4) wenigstens eine Führungsnut (8) aufweist oder ausbildet, in die das jeweils andere Bauteil (1) mit einem Nut-Eingriffsbereich (11a bis 11d; 17) eingreift, insbesondere formschlüssig eingreift, und darin entlang einer definierten Wegstrecke verschiebbar geführt ist.

5. Backblech nach Anspruch 4, **dadurch gekennzeichnet, dass** die wenigstens eine Führungsnut (8) am Stabilisier- und/oder Tragelement (3) ausgebildet ist, in die ein backblechseitiger Nut-Eingriffsbereich (11a bis 11 d; 17) eingreift.

6. Backblech nach Anspruch 5, **dadurch gekennzeichnet, dass** das Backblech (1) wenigstens zwei einander gegenüberliegende und zueinander parallele Seiten aufweist, insbesondere das Backblech (1) eine Rechteckform aufweist,
dass das Backblech (1) zur Ausbildung gegenüberliegender Nut-Eingriffsbereiche (11a bis 11 d) an den gegenüberliegenden und zueinander parallelen Backblechseiten wenigstens eine randseitige Umbiegung, insbesondere eine Abkantung oder eine Umbördelung, als Eingriffsschenkel aufweist, vorzugsweise eine solche Umbiegung die im Querschnitt betrachtet in etwa U-förmig ausgebildet ist, und
dass am Stabilisier- und/oder Tragelement (3) den Eingriffsschenkeln (11a bis 11 d) zugeordnete Führungsnuten (8, 15) angeordnet oder ausgebildet sind.

7. Backblech nach Anspruch 5, **dadurch gekennzeichnet, dass** das Backblech (1) wenigstens zwei einander gegenüberliegende und zueinander parallele Seiten aufweist, insbesondere das Backblech eine Rechteckform aufweist,
dass am Backblech zur Ausbildung gegenüberliegender Nut-Eingriffsbereiche an den gegenüberliegenden und zueinander parallelen Backblechseiten wenigstens einen durch ein separates Bauteil, insbesondere eine Schiene (17) oder dergleichen, gebildeten Eingriffsschenkel (18) aufweist, wobei das Bauteil an der Backblechunterseite fixiert ist, bevorzugt durch Schweißen, höchst bevorzugt durch Punktschweißen fixiert ist, und
dass am Stabilisator- und/oder Tragelement den Eingriffsschenkeln zugeordnete Führungsnuten angeordnet oder ausgebildet sind.

8. Backblech nach einem der Ansprüche 4 bis 7, **dadurch gekennzeichnet, dass** die wenigstens eine Führungsnut (8) durch eine Schiene (2a bis 2c) gebildet ist, die als separates Bauteil mit dem Backblech (1) oder mit dem Stabilisier- und/oder Tragelement (3) verbunden ist und zusammen mit diesem oder alleine eine schlitzartige Nutöffnung ausbildet.

9. Backblech nach Anspruch 8, **dadurch gekennzeichnet, dass** die die wenigstens eine Führungsnut (8) ausbildende Schiene (2a bis 2c) mit dem jeweils zugeordneten Bauteil, insbesondere mit dem Stabilisier- und/oder Tragelement (3), lösbar oder unlösbar verbunden ist, insbesondere mit diesem stoffschlüssig verbunden ist, höchst bevorzugt durch mehrere voneinander beabstandete Schweißpunkte (9) verbunden ist, wobei bevorzugt vorgesehen ist, dass die Schiene (2a bis 2c) im Querschnitt U-förmig ausgebildet ist und/oder in den Schweißpunkt-Ansatzbereichen am oberen, nicht festzulegenden U-Schenkel (7) eine Ausnehmung (10) aufweist.

10. Backblech nach einem der vorhergehenden Ansprüche, **dadurch gekennzeichnet, dass** das Stabilisier- und/oder Tragelement durch einen Rahmen (3), bevorzugt durch einen im montierten Zustand randseitig an der Backblechunterseite wenigstens bereichsweise umlaufenden Rahmen (3) gebildet ist, höchst bevorzugt durch einen rechteckförmigen Rahmen (3).

11. Backblech nach Anspruch 10, **dadurch gekennzeichnet, dass** am rechteckförmigen Rahmen (3) an drei der vier Rechteckseiten Führungsnuten mit einer Nutöffnung (8) angeordnet sind, in die im aufgeschobenen Zustand des Backblechs (1) jeweils backblechseitig ausgebildete randseitige Eingriffsschenkel (11a bis 11c) als Nut-Eingriffsbereiche im Wesentlichen formschlüssig eingreifen, wobei das Backblech mit auf gegenüberliegenden Backblechseiten liegenden randseitigen Einghffsschenkein (11 b, 11 c) in entsprechend gegenüberliegend ausgebildete Führungsnuten (8) einfädelbar und solang entlang dieser verschiebbar ist, bis ein zu den vorstehend genannten randseitigen Eingriffsschenkein (11b, 11 c) im Wesentlichen quer verlaufender dritter randseitiger Eingriffsschenkel (11a), der vorzugsweise durch eine randseitige Umbiegung oder durch ein separates, an der Backblechunterseite fixierbares, insbesondere durch Schweißen fixierbares, Bauteil gebildet ist, in Eingriffs- und/oder Anschlagverbindung mit der ebenfalls quer verlaufenden, rahmenseitigen Führungsnut (8) gelangt.

12. Backblech nach Anspruch 11, **dadurch gekennzeichnet, dass** sich die Führungsnuten (8) und/oder die zugeordneten, backblechseitigen Eingriffsschenkel (11a bis 11 c) wenigstens entlang eines Teilbereich der zugeordneten Rechteckseite erstrecken.

13. Backblech nach Anspruch 11 oder Anspruch 12, **dadurch gekennzeichnet, dass** der Rahmen (3) an der vierten, keine Führungsnut aufweisenden Seite, bei aufgeschobenem Backblech, mit einem Schließelement (4), insbesondere mit einem abgewinkelten Schließblech, versehen ist, das zusammen mit dem Rahmen (3) oder alleine einen Nutschlitz (15) ausbildet, in den das Backblech (1) mit einem randseitigen Eingriffsschenkel (11d) eingreift, insbesondere formschlüssig eingreift.

14. Backblech nach einem der vorhergehenden Ansprüche, **dadurch gekennzeichnet, dass** das Backblech (1) durch eine Blechplatte hergestellt ist, insbesondere durch eine Blechplatte aus einem Leichtmetall, höchst bevorzugt aus Aluminium.

15. Backblech nach einem der vorhergehenden Ansprüche, **dadurch gekennzeichnet, dass** das Backblech im aufgeschobenen, montierten Zustand schwimmend auf dem Stabilisier- und/oder Tragelement gehaltert und/oder gelagert ist, insbesondere im Hinblick auf temperaturbedingte Formveränderungen der Bauteile und/oder zur Vermeidung von Verzwängungen oder dergleichen.
